# EUROPÄISCHE PATENTSCHRIFT

(11) **EP 1 422 795 B1**
(45) Veröffentlichungstag und Bekanntmachung des Hinweises auf die Patenterteilung: **10.05.2006**
(21) Anmeldenummer: 03013483.7
(22) Anmeldetag: 26.06.2003
(51) Int. Cl.: H01S 3/23, H01S 3/225

(54) **Lasersystem mit Kombination mehrerer Laserstrahlen**
Laser system combining several laser beams
Système laser combinant plusieurs faisceaux laser

(30) Priorität: 31.10.2002 DE 10250926
(43) Veröffentlichungstag der Anmeldung: 26.05.2004
(73) Patentinhaber: MicroLas Lasersystem GmbH, 37079 Göttingen (DE)
(72) Erfinder: Kahlert, Hans-Jürgen, Dr., 37077 Göttingen (DE)
(74) Vertreter: von Hellfeld, Axel

(56) Entgegenhaltungen:
- EP-A- 0 568 727
- US-A- 3 855 544
- US-A- 5 325 380
- MACDONALD M P ET AL: "Efficient polarised output from end-pumped multirod resonators" OPTICS COMMUNICATIONS, NORTH-HOLLAND PUBLISHING CO. AMSTERDAM, NL, Bd. 160, Nr. 4-6, 15. Februar 1999 (1999-02-15), Seiten 354-363, XP004158001 ISSN: 0030-4018

## Beschreibung

Die Erfindung betrifft ein Lasersystem, welches zwei oder mehr Laser aufweist, deren Laserstrahlen miteinander kombiniert werden.

Lasersysteme, bie denem mehrere Laserstrahlen miteinander kombiniert werden , sind beispielweise aus den Dokumenten US 5 325 380 A und EP 0 568 727 A bekannt.

Der Erfindung liegt die Aufgabe zugrunde, ein Lasersystem bereitzustellen, das mit einfachen Mitteln bei vorgegebenen Lasern möglichst hohe Laserleistungen erzielt.

Erfindungsgemäß ist hierfür gemäβ Anspruch ein Lasersystem vorgesehen mit zwei oder mehr Lasern mit jeweils einem Resonator, der einen Endspiegel und einen Auskoppelspiegel aufweist, deren von den Auskoppelspiegeln emittierte Ausgangsstrahlen auf zumindest einen Strahlteiler und einen Spiegel derart gerichtet sind, dass von dem Spiegel reflektierte Strahlung über den Strahlteiler zurück in die Resonatoren der Laser gelangt.

Mit einer solchen Anordnung von zumindest zwei Lasern wird die Laserstrahlung beider Laser in einer Art "Multiplexen" zur Überlagerung gebracht, d.h. die Laserstrahlung fällt im Wesentlichen räumlich (örtlich) zusammen und es sind mit wenigen zusätzlichen Komponenten sehr hohe Leistungen erreichbar, z.B. kann mit zwei gepulsten Excimerlasern eine Leistung von etwa 500 W erreicht werden. Dabei können die Laser sowohl im Wesentlichen gleichzeitig getriggert werden oder nacheinander.

Bei der erfindungsgemäßen Koppelung von zumindest zwei Resonatoren hat der Strahlteiler bevorzugt eine Transmission von etwa 50 %. Die insgesamt erzeugte Laserleistung der gekoppelten Strahlung hängt aber nur wenig empfindlich von dieser Transmission ab, so dass beste Ergebnisse in einem Bereich von Transmissionswerten des Strahlteiler von 30 bis 70 %, bevorzugt 40 bis 60 % erreicht werden.

Gemäß einer bevorzugten Ausgestaltung der Erfindung trifft die von den einzelnen Lasern emittierte Ausgangsstrahlung auf entgegengesetzten Seiten auf den Strahlteiler.

Bei Einsatz von mehr als zwei gekoppelten Lasern werden entsprechend zusätzliche Strahlteiler verwendet.

Nach einem Ausführungsbeispiel der Erfindung lässt ein Strahlteiler die Ausgangsstrahlung beider Laser teilweise durch und reflektiert diese teilweise. Dabei ist die durchgelassene Strahlung des einen Lasers kolinear mit der reflektierten Strahlung des anderen Lasers, d.h. liegt im Raum an gleicher Stelle.

Gemäß einem bevorzugten Ausführungsbeispiel der Erfindung sind die verwendeten Laser hinsichtlich der emittierten Wellenlänge und Pulslänge gleich, z.B. können zwei oder mehr gleiche Excimerlaser eingesetzt werden. Das erfindungsgemäße Verfahren kann als "multiplexen" von zwei oder mehr Laserröhren verstanden werden.

Mit der Erfindung kann ein kombinierter Laserpuls erzeugt werden mit größerer Pulslänge (im Vergleich zu den kombinierten Einzelpulsen). Dies kann z.B. dadurch geschehen, dass beide Laser (z.B. Excimerlaser) synchronisiert getriggert werden und dann der eine Laserpuls in Bezug auf den anderen um eine vorgebbare Zeitspanne von bevorzugt mehreren 10 ns verzögert wird, z.B. um 10 bis 50 ns. Diese zeitliche Verzögerung der beiden kombinierten Laserstrahlen kann in an sich bekannter Weise über ein geeignetes "Delay" erreicht werden, also eine Verzögerungsstrecke.

Die Erfindung ermöglicht es, mit kleinen Laserbaugruppen einen kolinearen Laserstrahl mit sehr hoher Leistung durch Multiplexen zu erzeugen, wobei die ansonsten günstigen Eigenschaften der Einzelstrahlen (z.B. die Divergenz) erhalten bleiben. Da mit dem erfindungsgemäßen Aufbau der Laser die Laserpulse nacheinander oder auch zugleich getriggert (gestartet) werden können, kann man eine höhere Pulsenergie erzeugen oder auch wahlweise eine höhere Wiederholrate. Z.B. kann zur Erzeugung einer hohen Wiederholrate der eine Laser in der Pausenzeit des anderen Lasers getriggert werden.

Nachfolgend werden Ausführungsbeispiele der Erfindung anhand der Zeichnung näher erläutert. Es zeigt:
- Figur 1: schematisch eine erste Anordnung von zwei Lasern, deren Ausgangsstrahlen kombiniert werden, und
- Figur 2: ein zweites Ausführungsbeispiel einer Anordnung von zwei Lasern, deren Ausgangsstrahlen miteinander kombiniert werden.

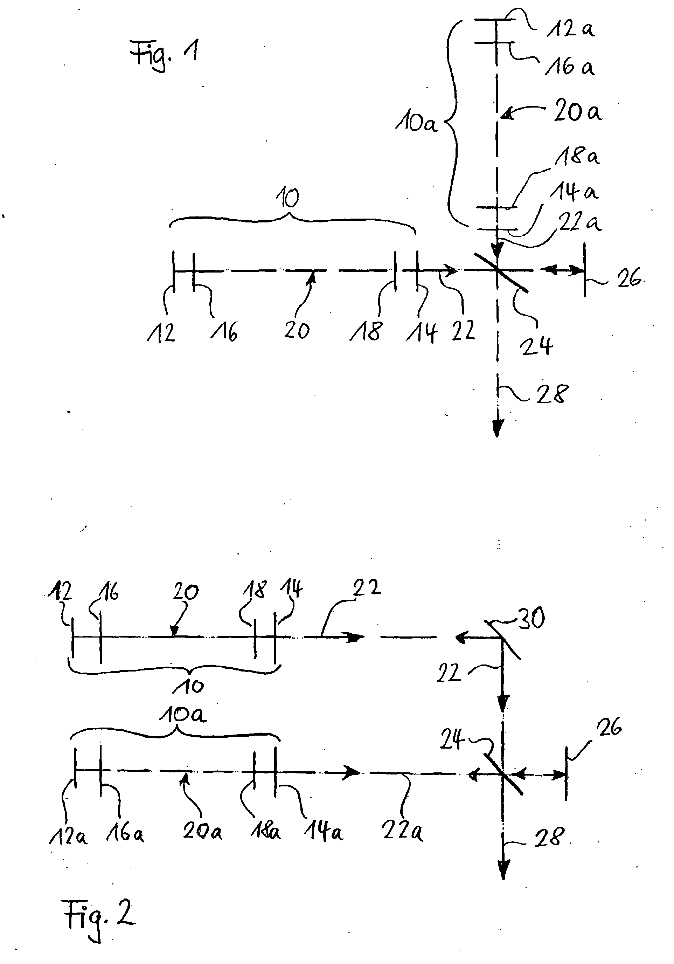

Figur 1 zeigt einen ersten Laser 10, z.B. einen Excimerlaser gemäß dem Stand der Technik. In bekannter Weise weist der Laser 10 einen Endspiegel 12 und einen Auskoppelspiegel 14 auf. Die Laserröhre wird durch Fenster 16, 18 abgeschlossen und das aktive Lasermedium in der Röhre ist mit dem Bezugszeichen 20 angedeutet. Der Laser 10 emittiert einen Ausgangsstrahl 22.

Daneben ist ein weiterer Laser 10a angeordnet, der beim dargestellten Ausführungsbeispiel baugleich ist mit dem beschriebenen Laser 10, wobei einander entsprechende Bauteile die gleiche Bezugsziffer aufweisen, beim zweiten Laser 10a jeweils mit einem "a" versehen.

Die Ausgangsstrahlen 22, 22a werden auf einen Strahlteiler 24 in Form eines teildurchlässigen Spiegels gerichtet. Beim dargestellten Ausführungsbeispiel hat der Strahlteiler 24 eine Transmission von etwa 50 %. Dies bedeutet, dass der in Figur 1 von links einfallende Ausgangsstrahl 22 des ersten Lasers 10 zu etwa 50 % im Wesentlichen gradlinig durch den Strahlteiler 24 durchtritt und dort auf einen Spiegel 26 mit 100 % Reflexion trifft. Der Ausgangsstrahl 22a des zweiten Lasers 10a wird entsprechend zu etwa 50 % am Strahlteiler 24 reflektiert und trifft kolinear mit dem zuvor beschriebenen Anteil des Ausgangsstrahls 22 auf den Spiegel 26. Die beiden zu 100 % am Spiegel 26 reflektierten Strahlen gelangen wieder auf den Strahlteiler 24 und treten dort teilweise durch und werden teilweise reflektiert. Auf diese Weise gelangen die Strahlen zurück in die Resonatoren der beiden Laser 10, 10a und werden dort mit dem Lasereffekt ggf. verstärkt. Die vom Spiegel über den Strahlteiler zurückreflektierten Strahlungsanteile sind bezüglich ihrer Herkunft aus dem ersten oder dem zweiten Laser nicht mehr unterscheidbar, sofern die beiden emittierten Laserstrahlen 22, 22a hinsichtlich Wellenlänge sowie Pulszeiten übereinstimmen. Schon nach wenigen Umläufen wird mehr als 90 % der überhaupt verfügbaren Laserenergie mit dem Ausgangsstrahl 28 emittiert. Der Ausgangsstrahl 28 ist eine kolineare Überlagerung (Kombination) beider Ausgangsstrahlen der Laser mit sehr hoher Leistung.

Es hat sich gezeigt, dass die Transmission I des Strahlteilers 24 einen Optimalwert von etwa T=50 % hat. Die insgesamt erzielte Ausgangsleistung im gepulsten Ausgangsstrahl 28 hängt aber nicht besonders kritisch von dieser Transmission ab, so dass eine Variation um den Optimalwert von ± 30 % Transmission durchaus noch zu guten Ergebnissen führt. Bevorzugt liegt die Transmission des Strahlteilers 24 zwischen T= 40 % und T= 60 %. Durch das Multiplexen der beiden Laserstrahlen wird die Pulslänge etwas größer im Vergleich zu den Pulslängen der einzelnen Laser 10, 10a.

Das in Figur 2 gezeigte Ausführungsbeispiel zeigt ebenfalls zwei kombinierte Laser, wobei die einzelnen Laser 10, 10a sowie der Strahlteiler 24 und der Spiegel 26 funktionsgleich sind mit dem oben beschriebenen Ausführungsbeispiel nach Figur 1. Beim Ausführungsbeispiel nach Figur 2 sind die beiden Laser 10, 10a auf engstem Raum parallel angeordnet und die Ausgangsstrahlung 22 des Lasers 10 wird über einen Umlenkspiegel 30 so auf den Strahlteiler 24 gerichtet, dass die oben beschriebene Kolinearität sowohl hinsichtlich der am Strahlteiler 24 reflektierten Strahlung als auch hinsichtlich der durch den Strahlteiler 24 hindurchtretenden Strahlung erreicht wird. Insgesamt gilt, dass die in den Figuren 1 und 2 gezeigten Strahlengänge kolinear sind, d.h. insbesondere im Bereich der Laser-Resonatoren sind die in beiden Richtungen verlaufenden Strahlen kolinear.

Werden mehr als zwei Laser kombiniert, kann z.B. beim Ausführungsbeispiel nach Figur 2 ein weiterer Strahlteiler (nicht gezeigt) in den Strahlengang des Laserstrahl 22 zwischen den Umlenkspiegel 30 und dem Strahlteiler 24 angeordnet werden.

## Patentansprüche

1. Lasersystem mit zwei oder mehr Lasern (10, 10a) mit jeweils einem Resonator, der einem Endspiegel (12,12a) und einem Auskoppelspiegel (14,14a) aufweist, deren von den Auskoppelspiegeln (14,14a) emittierte Ausgangsstrahlen (22, 22a) auf zumindest einen Strahlteiler (24) und einen Spiegel (26) derart gerichtet sind, dass von dem Spiegel (26) reflektierte Strahlung über den Strahlteiler (24) zurück in die Resonatoren (12, 14; 12a, 14a) der Laser (10, 10a) gelangt.

2. Lasersystem nach Anspruch 1, **dadurch gekennzeichnet, dass** die von den Lasern (10, 10a) emittierten Ausgangsstrahlen (22, 22a) auf entgegengesetzten Seiten auf den Strahlteiler (24) fallen.

3. Lasersystem nach einem der Ansprüche 1 oder 2, **dadurch gekennzeichnet, dass** der Strahlteiler (24) die Ausgangsstrahlung beider Laser (10, 10a) teilweise durchlässt und teilweise reflektiert, wobei die durchgelassene Strahlung des einen Lasers kolinear ist mit der reflektierten Strahlung des anderen Lasers.

4. Lasersystem nach einem der vorhergehenden Ansprüche, **dadurch gekennzeichnet, dass** die Transmission des Strahlteilers (24) zwischen 40 % und 60 % liegt.

5. Lasersystem nach einem der vorhergehenden Ansprüche, **dadurch gekennzeichnet, dass** die Laser (10, 10a) Strahlung gleicher Wellenlänge emittieren.

6. Lasersystem nach einem der vorhergehenden Ansprüche, **dadurch gekennzeichnet, dass** die Laser (10, 10a) Excimerlaser sind.

## Claims

1. A laser system comprising two or more lasers (10, 10a) each having one resonator that is provided with an end mirror (12, 12a) and a coupling-out mirror (14, 14a), the output beams (22, 22a) of which emitted by the coupling-out mirrors (14, 14a) are directed on to at least one beam-splitter (24) and one mirror (26) in such a way that radiation reflected by the mirror (26) returns to the resonators (12, 14; 12a, 14a) of the lasers (10, 10a) via the beam-splitter (24).

2. Laser system according to Claim 1, **characterised in that** the output beams (22, 22a) emitted by the lasers (10, 10a) are incident on the beam-splitter (24) on opposite sides.

3. Laser system according to one of claims 1 or 2, **characterised in that** the beam-splitter (24) allows a part of the output radiation of the two lasers (10, 10a) to pass through it and partially reflects said output radiation, the transmitted radiation of the one laser being collinear with the reflected radiation of the other laser.

4. Laser system according to one of the preceding claims, **characterised in that** the transmission of the beam-splitter (24) is between 40% and 60%.

5. Laser system according to one of the preceding claims, **characterised in that** the lasers (10, 10a) emit radiation having the same wavelength.

6. Laser system according to one of the preceding claims, **characterised in that** the lasers (10, 10a) are excimer lasers.

## Revendications

1. Système laser comprenant deux ou plusieurs lasers (10, 10a) dotés chacun d'un résonateur présentant un miroir d'extrémité (12, 12a) et un miroir de sortie (14, 14a), et dont les faisceaux de sortie (22, 22a) émis par les miroirs de sortie (14, 14a) sont dirigés sur au moins un diviseur de faisceau (24) et un miroir (26) de telle sorte que le rayonnement réfléchi par le miroir (26) est dirigé en retour dans les résonateurs (12, 14 ; 12a, 14a) des lasers (10, 10a) via le diviseur de faisceau (24).

2. Système laser selon la revendication 1, **caractérisé en ce que** les faisceaux de sortie (22, 22a) émis par les lasers (10, 10a) tombent respectivement sur un des côtés opposés du diviseur de faisceau (24).

3. Système laser selon la revendication 1 ou 2, **caractérisé en ce que** le diviseur de faisceau (24) laisse passer partiellement et réfléchit partiellement le rayonnement de sortie des deux lasers (10, 10a), le rayonnement traversant d'un des lasers étant co-linéaire au rayonnement réfléchi de l'autre laser.

4. Système laser selon l'une des revendications précédentes, **caractérisé en ce que** le taux de transmission du diviseur de faisceau (24) varie entre 40 % et 60 %.

5. Système laser selon l'une des revendications précédentes, **caractérisé en ce que** les lasers (10, 10a) émettent un rayonnement de longueur d'onde identique.

6. Système laser selon l'une des revendications précédentes, **caractérisé en ce que** les lasers (10, 10a) sont des lasers à excimer.
